# EUROPEAN PATENT SPECIFICATION

(11) **EP 3 919 994 B1**
(45) Date of publication and mention of the grant of the patent: **26.02.2025**
(21) Application number: 20774822.9
(22) Date of filing: 05.03.2020
(51) Int. Cl.: G05B 19/18, G05B 19/4067, G05B 19/05

(54) **CONTROL DEVICE**
STEUERUNGSVORRICHTUNG
DISPOSITIF DE COMMANDE

(30) Priority: 15.03.2019 JP 2019048116
(43) Date of publication of application: 08.12.2021
(73) Proprietor: OMRON Corporation, Shiokoji-dori, Shimogyo-Ku Kyoto-shi Kyoto 600-8530 (JP)
(72) Inventor: YASUI, Yuto, Kyoto-shi, Kyoto 600-8530 (JP); SHIMAMURA,Junji, Kyoto-shi, Kyoto 600-8530 (JP); NAKANO, Masahiko, Kyoto-shi, Kyoto 600-8530 (JP); OKURA, Takafumi, Kyoto-shi, Kyoto 600-8530 (JP); SHIMAMURA, Tomonori, Kyoto-shi, Kyoto 600-8530 (JP)
(74) Representative: Isarpatent
(86) International application number: PCT/JP2020/009426
(87) International publication number: WO 2020/189304

(56) References cited:
- EP-A1- 3 336 632
- JP-A- 2011 180 983
- JP-A- 2016 009 355
- JP-A- 2017 196 711
- JP-A- 2018 097 653
- JP-A- H07 302 103
- JP-B2- S 556 456
- US-A- 4 084 083
- US-A1- 2011 245 959

## Description

### FIELD

The present invention relates to a controller for performing electronic cam control over a master axis and a slave axis in a work machine including a master axis drive and a slave axis drive.

### BACKGROUND

Controlling the operations of machines and equipment includes motion control for controlling the motions of motors. Such motion control may be performed using electronic cams. An electronic cam achieves the operation of a mechanical cam through electronic control and performs synchronization control for synchronizing a master axis and a slave axis to follow an electronic cam profile defined using software. Such synchronization control is herein also referred to as electronic cam control. An electronic cam profile is changed and selected as appropriate to achieve substantially intended cam setups and precise cam shape adjustments. For example, Patent Literature 1 describes a technique for easily changing the operation of the slave axis during an electronic cam operation.

Patent Literature 2 describes a technique used in a controller that performs electronic cam control for eliminating any deviation of the correlation between a master axis and a slave axis from an electronic cam profile in response to stop of synchronization control over the master axis and the slave axis through electronic cam control. To eliminate any deviation of the correlation between the master axis and the slave axis from the electronic cam profile that can occur in response to the stop of synchronization control, the intended position of the slave axis corresponding to the cam angle of the stopped master axis is calculated, and the slave axis is then moved to the intended position without the master axis being moved. The electronic cam control can then be resumed after the deviation is eliminated.

JP 2011180983 A discloses an electronic cam control device which synchronously controls a plurality of drive shafts including an input shaft by causing drive control devices corresponding to motors as the drive shafts to execute control based on an electronic cam command profile defining cam stroke positions corresponding to cam angles into which one revolution of the input shaft is divided.

US 4,084,083 A discloses an apparatus for generating synchronized multi-axis intermittent motion utilizing electronic encoding, memory and a servo controlled positioning system.

US 2011 /245959 A1 discloses a method of machine control which can include providing at least a system master signal, selectively synchronizing at least subsystem master signal to the system master signal based on the value of the system master signal, and carrying out at least one operation based on the value of the other master signal.

EP 3 336 632 A1 discloses a production system which includes a manufacturing apparatus, a post-processing apparatus, conveyors for transporting workpieces manufactured by the manufacturing apparatus to the post-processing apparatus, an image sensor arranged above a conveyor connected to the manufacturing apparatus to recognize workpieces traveling on the conveyor and measure the workpiece density on the conveyor, a robot that picks each workpiece on the conveyor connected to the manufacturing apparatus, and a controller.

### CITATION LIST

### PATENT LITERATURE

Patent Literature 1: Japanese Patent No. 4807475
Patent Literature 2: Japanese Patent No. 5506456

### SUMMARY

### TECHNICAL PROBLEM

In response to stop of electronic cam control over the master axis drive and the slave axis drive for any reason in the work machine, the correlation between the master axis and the slave axis may deviate from the electronic cam profile used for electronic cam control. The stop causes the master axis drive and the slave axis drive to drive the axes independently of each other. Resuming the electronic cam control may be difficult when the correlation between the master axis and the slave axis remains deviating from the electronic cam profile.

The deviation of the correlation between the master axis and the slave axis may be eliminated with known techniques. However, the slave axis drive can accidentally interfere with a workpiece when the slave axis is returning to its intended position. For example, the slave axis may return to its intended position after the synchronization control is stopped during a predetermined task on the workpiece being performed by the slave axis drive under the electronic cam control over the master axis drive and the slave axis drive. When the slave axis is returning to the position, the slave axis drive can interfere with the workpiece and perform a certain task without being requested to perform such a predetermined task. To protect the work machine and the workpiece, the slave axis drive is to avoid such accidental interference with the workpiece.

One or more aspects of the present invention are directed to a technique for causing a master axis and a slave axis to return to have the correlation following an electronic cam profile after stop of electronic cam control in a work machine for performing a predetermined task through electronic cam control.

### SOLUTION TO PROBLEM

In response to the above issue, the structure according to the aspects of the present invention calculates, in electronic cam control, a path that avoids an interference section in which the slave axis drive can interfere with a predetermined task as a return path for the master axis and the slave axis to return to have the correlation following an electronic cam profile associated with the electronic cam control after the synchronization control over the master axis and the slave axis is stopped. In this manner, the electronic cam control can be resumed readily.

More specifically, a controller for a work machine according to an aspect of the present invention includes a master axis drive corresponding to a master axis and a slave axis drive corresponding to a slave axis. The work machine causes the slave axis drive to perform a predetermined task on a workpiece. The controller performs synchronization control of a position of the slave axis drive based on an electronic cam profile corresponding to a cam angle of the master axis. The controller includes an obtainer, a calculator, and a return unit. The obtainer obtains a predetermined position based on the electronic cam profile in response to stop of synchronization control over the master axis drive and the slave axis drive. The predetermined position is a position of the slave axis drive corresponding to a cam angle of the stopped master axis. The calculator calculates, in response to the stopped slave axis drive being determined to be at a position deviating from the predetermined position, a return path based on the predetermined position and an interference section in which the slave axis drive interferes with the workpiece for the predetermined task. The interference section is in a range of cycles for the slave axis drive. The return path causes the slave axis drive to reach the predetermined position while avoiding the interference section. The return unit moves the slave axis drive to the predetermined position on the return path by driving the slave axis drive.

The above controller performs synchronization control over the master axis drive corresponding to the master axis and the slave axis drive corresponding to the slave axis based on an electronic cam profile. The synchronization control may be typically referred to as electronic cam control. During such synchronization control, the correlation between the master axis and the slave axis follows the electronic cam profile. The master axis drive and the slave axis drive cooperate with each other under the correlation to achieve a predetermined task on the workpiece. The electronic cam profile may be adjusted as appropriate for the type of an intended predetermined task within the range in which the master axis drive and the slave axis drive are drivable.

In response to, for example, an emergency stop request, synchronization control over the master axis drive and the slave axis drive following the electronic cam profile is stopped. The stop can then cause the correlation between the master axis and the slave axis to deviate from the electronic cam profile. In the synchronization control resumed after the stop, the correlation between the master axis and the slave axis remains deviating. This can cause the slave axis drive to perform a predetermined task on the workpiece in an unintended manner. The controller performs a return process to perform intended synchronization control using the obtainer, the calculator, and the return unit.

The obtainer first calculates a predetermined position of the slave axis drive corresponding to the cam angle of the stopped master axis. The predetermined position is defined as an expected position of the slave axis drive based on the current cam angle of the master axis when following the electronic cam profile. The obtainer can obtain the predetermined position based on the electronic cam profile. The current position of the stopped slave axis drive deviating from the obtained predetermined position indicates that any synchronization control resumed after the stop can cause the slave axis drive to perform a predetermined task on the workpiece in an unintended manner.

In that case, the calculator calculates a return path based on the obtained predetermined position and an interference section in a range of cycles for the slave axis drive. The return path causes the slave axis drive to move to the predetermined position while avoiding the interference section. The return unit then performs the return process for moving the slave axis drive to return to the predetermined position on the return path. In this manner, calculating the return path reflecting the interference section causes the slave axis drive to avoid unintended interference with the workpiece when returning to the predetermined position, and can readily resume electronic cam control that is synchronization control over the master axis drive and the slave axis drive.

In the above controller, the slave axis drive may be rotatable in a positive direction and a negative direction. The calculator may calculate, as the return path, a path in one of the positive direction or the negative direction to cause the slave axis drive to move to the predetermined position while avoiding the interference section. In this manner, the slave axis drive is rotatable in both the positive direction and the negative direction. The return path to avoid the interference section can be calculated to reflect the relative positional relationship between the predetermined position and the interference section. The slave axis drive may be a device in any form other than such a rotatable device. In this case as well, the slave axis drive can have the structure to calculate the return path.

The above controller may further include a notifier that notifies that the calculator is unable to calculate the return path when a position of the stopped slave axis drive is included in the interference section or when the predetermined position is included in the interference section. Under this condition being satisfied, the slave axis drive cannot avoid interfering with the workpiece when returning to the predetermined position. In this case, the notifier notifies the user of the difficulty in calculating the return path in this situation to prompt the user to take other actions. For example, a device such as a typical manual pulse generator may be used to adjust the position of the slave axis drive as intended to resume synchronization control.

The above controller may further include a display that displays, together with the electronic cam profile, the predetermined position and a current position of the slave axis drive when the slave axis drive is being driven by the return unit. This structure allows the user to more easily view changes in the position of the slave axis drive when the slave axis drive is returning to the predetermined position, and thus increases user convenience.

### ADVANTAGEOUS EFFECTS

The work machine for performing a predetermined task through electronic cam control causes the master axis and the slave axis to return to have the correlation following the electronic cam profile after stop of the electronic cam control.

### BRIEF DESCRIPTION OF THE DRAWINGS

FIGs. 1A and 1B are schematic diagrams of a control system including a standard programmable logic controller (PLC) as a controller and a cutting machine under electronic cam control performed by the control system.
FIG. 2 is a diagram describing an interference section for the cutting machine shown in FIGs. 1A and 1B.
FIG. 3 is a control block diagram of the standard PLC mainly in an embodiment.
FIG. 4 is a graph showing an electronic cam profile used in electronic cam control.
FIG. 5 is a flowchart of a return process for moving a slave axis drive to return to a predetermined position following the electronic cam profile after stop of electronic cam control.
FIG. 6 is a diagram of an example display screen showing changes in the position of the slave axis drive in the return process shown in FIG. 5.

### DETAILED DESCRIPTION

### Example Use

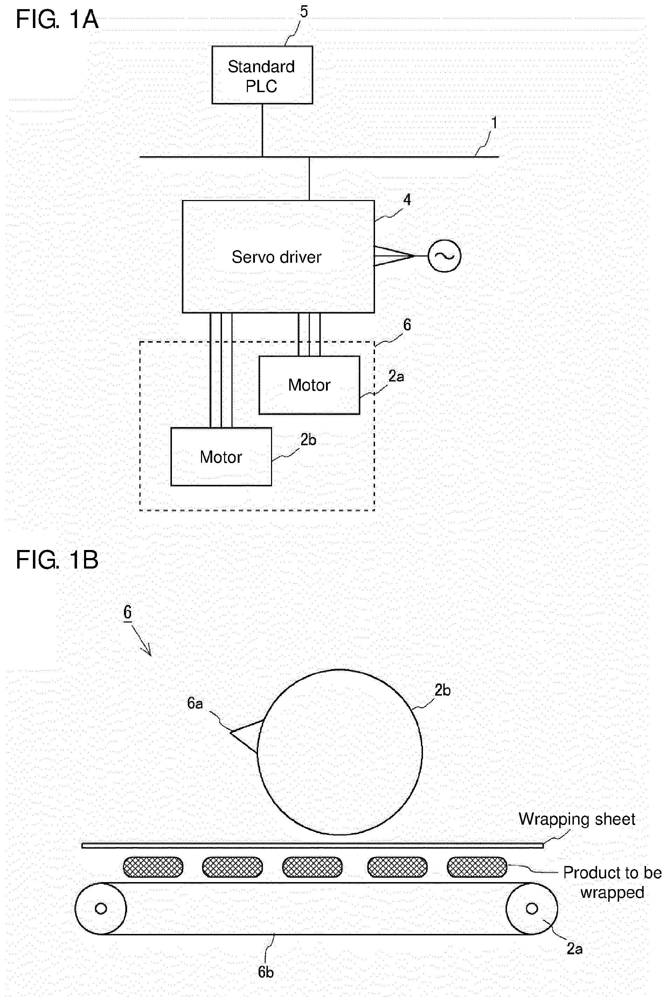

An example use of a controller according to one or more embodiments will now be described with reference to FIGs. 1A to 2. FIG. 1A is a schematic diagram of a control system including the controller. The control system includes a network 1, a servo driver 4, and a standard programmable logic controller (PLC) 5. The servo driver 4 is a servo controller for controlling a cutting machine 6 through servo control. The cutting machine 6 includes two motors 2a and 2b corresponding to two control axes. The control system shown in FIG. 1A includes the single servo driver 4 to drive the two control axes (motors). In some embodiments, the control system may include servo drivers 4 connected with a network 1 in a one-to-one correspondence with the control axes. The servo driver(s) 4 receives a command for driving the cutting machine 6 from the standard PLC 5. The standard PLC 5 corresponds to the controller in an aspect of the present disclosure.

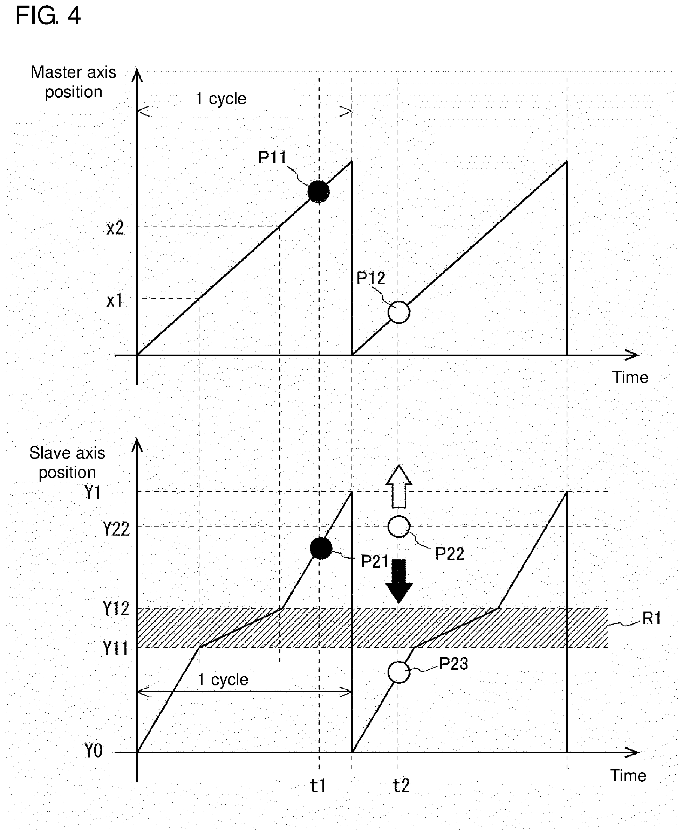

The control system performs electronic cam control over the motors 2a and 2b in the cutting machine 6 using commands received from the standard PLC 5. In the electronic cam control, the motors 2a and 2b are controlled through synchronization control following a predetermined electronic cam profile (refer to FIG. 4 described later). In the present embodiment, the control axis of the motor 2a is the master axis, and the motor 2a is the master axis drive. In the present embodiment, the control axis of the motor 2b is the slave axis, and the motor 2b is the slave axis drive. The electronic cam control will be described in detail later.

The cutting machine 6 receives, from the standard PLC 5, a command for cutting a wrapping sheet properly at positions intended for products to be wrapped. The servo driver 4 controls the motors 2a and 2b through feedback control to cause the motors to follow the command. In response to the command, the servo driver 4 receives feedback signals output from encoders connected to the motors 2a and 2b, and feeds a drive current to the motors 2 to cause the output from each motor to follow the command. The current fed herein is an alternating current fed from an alternating-current power supply to the servo driver 4. In the present embodiment, the servo driver 4 receives a three-phase alternating current. In another embodiment, the servo driver 4 may receive a single-phase alternating current. The servo driver 4 herein may perform any feedback control. The components of the servo driver 4 are not essential in the embodiment of the present invention and will not be described in detail.

FIG. 1B is a schematic diagram of the cutting machine 6. The cutting machine 6 includes a belt conveyor 6b that is drivable by the motor 2a as the master axis drive. The belt conveyor 6b receives products to be wrapped, which are arranged at regular intervals and covered with a continuous wrapping sheet. The cutting machine 6 is used to cut the continuous wrapping sheet with a rotary cutter 6a at positions intended for the products to be wrapped. The continuous wrapping sheet corresponds to a workpiece. In the cutting machine 6, the products to be wrapped are transported sequentially toward the rotary cutter 6a. In the present embodiment, the products to be wrapped are transported from left to right in FIG. 1B. The rotary cutter 6a rotates as driven by the motor 2b. Every time the rotary cutter 6a revolves once (revolves once in a positive direction as a counterclockwise direction in the present embodiment), the blade of the rotary cutter 6a interferes with and cuts the wrapping sheet, causing a cut portion of the wrapping sheet to be placed on the product to be wrapped. The product is then wrapped with the portion of the wrapping sheet by a packaging machine (not shown).

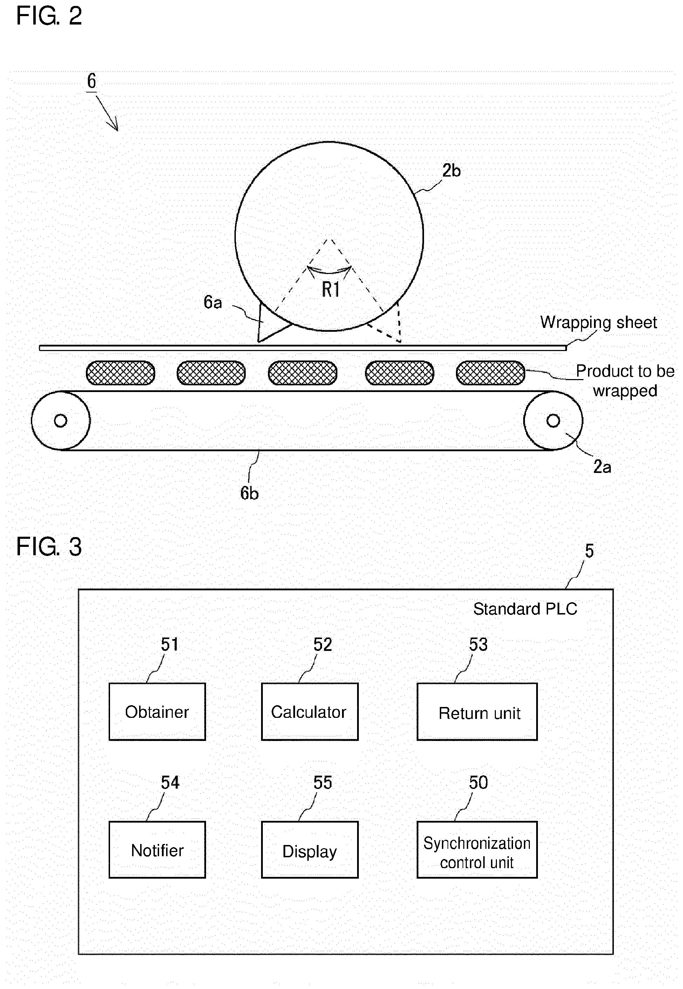

To facilitate understanding in the present embodiment, the motor 2a revolves once to transport a single product to be wrapped on the belt conveyor 6b by a distance appropriate for the wrapping. The motor 2b revolves once to drive the rotary cutter 6a by one revolution to cut a portion of the wrapping sheet with the length corresponding to the single product to be wrapped. More specifically, as shown in FIG. 2, the blade of the rotary cutter 6a interferes with the wrapping sheet as the workpiece when the rotation angle of the motor 2b driving the rotary cutter 6a is within a range R1. The range R1 in one revolution as the range of cycles of the motor 2b corresponds to an interference section in an aspect of the present disclosure.

The control structure of the standard PLC 5 will now be described with reference to FIG. 3. The standard PLC 5 generates commands for operation (or motion) control to be performed in the electronic cam control over the cutting machine 6, and provides the commands to the servo driver 4. The standard PLC 5 includes, as its functional units, a synchronization control unit 50, an obtainer 51, a calculator 52, a return unit 53, a notifier 54, and a display 55. The processes performed by these functional units are implemented based on arithmetic operations performed by an arithmetic operation unit included in the standard PLC 5. The standard PLC 5 further includes a storage (not shown), or memory, storing, for example, information about an electronic cam profile used in the electronic cam control shown in FIG. 4.

The synchronization control unit 50 is a functional unit responsible for electronic cam control as synchronization control performed in the cutting machine 6. In the present embodiment, the synchronization control unit 50 generates commands for the motor 2a as the master axis drive and the motor 2b as the slave axis drive to follow the electronic cam profile shown in FIG. 4. In one cycle of the electronic cam profile, more specifically, the motor 2a is controlled to change its position (the rotation angle of the master axis) at a constant speed. The position of the motor 2b is controlled in synchronization with this movement of the motor 2a. The range for the position (rotation angle) of the slave axis, which is the range of cycles of the motor 2b, is defined by a minimum position Y0 and a maximum position Y1. As described above, the rotary cutter 6a rotates as driven by the motor 2b. When the rotation angle of the slave axis corresponds to its maximum position Y1, the rotary cutter 6a revolves once from the minimum position Y0 to return to the same state as at the minimum position Y0. The rotation direction is referred to as a positive direction for the rotary cutter 6a. The direction opposite to the rotation direction is referred to as a negative direction for the rotary cutter 6a.

The range of rotation angles between the first angle Y11 and the second angle Y12 (Y12 > Y11) in the range of cycles of the motor 2b corresponds to the interference section R1 shown in FIG. 2. In one cycle of electronic cam control, more specifically, the position of the motor 2b is in the range of Y11 to Y12 when the position of the motor 2a is in the range of X1 and X2. When a product to be wrapped driven and moved by the motor 2a is in a predetermined position range on the belt conveyor 6b, the blade of the rotary cutter 6a interferes with and cuts the wrapping sheet as the workpiece. The electronic cam profile is set to cause the revolution speed of the slave axis to be slower when the position of the motor 2b is between the first angle Y11 and the second angle Y12 than when the position of the motor 2b is not between these angles. This setting is intended for cutting with the blade of the rotary cutter 6a.

The synchronization control unit 50 also stops electronic cam control performed between the motor 2a and the motor 2b. Stopping the electronic cam control includes stopping the control in response to, for example, an emergency stop request provided from an emergency stop button (not shown) included in the control system. In response to the emergency stop request, the synchronization control unit 50 promptly stops the electronic cam control (synchronization control) that has been performed. This stops the motor 2a and the motor 2b independently of each other.

The obtainer 51 obtains, when the electronic cam control performed between the motor 2a and the motor 2b is stopped, the predetermined position of the motor 2b, which is the rotation angle of the motor 2b corresponding to the rotation angle of the stopped motor 2a, based on the electronic cam profile shown in FIG. 4. The predetermined position, which is obtained based on the electronic cam profile, is to be the intended rotation angle of the motor 2b expected when the correlation between the master axis and the slave axis is maintained through the electronic cam control after the electronic cam control is stopped.

The stop of electronic cam control will now be described with reference to FIG. 4. At time t1, a command to stop electronic cam control is provided. In this state, the motor 2a is the master axis drive as indicated by point P11, and the motor 2b is the slave axis drive as indicated by point P21. In response to the command to stop electronic cam control generated at time t1, the master axis and the slave axis, which are out of synchronization with each other, are controlled to stop. This stops the motor 2a and 2b at time t2. With the motors stopped, the rotation angle of the motor 2b as the slave axis drive is at a position deviating from the electronic cam profile with respect to the stopped master axis. At time t2, the motor 2a is at the position indicated by point P12 (the position of the motor 2a can be obtained with an encoder in the motor 2a), and the motor 2b is at the position indicated by point P22 (the position of the motor 2b can be obtained with an encoder in the motor 2b). The obtainer 51 then obtains the predetermined position at point P23 included in the electronic cam profile.

The calculator 52 calculates a return path to be used by the motor 2b to cause the rotation angle of the motor 2b deviating from an intended position in the electronic cam profile to return to the predetermined position P23 in the electronic cam profile. In detail, the calculator 52 calculates a return path that avoids an interference section R1 in which the rotary cutter 6a drivable by the motor 2b in the cutting machine 6 can interfere with a workpiece.

The return unit 53 drives the motor 2b to move the motor 2b to the predetermined position P23 on the return path calculated by the calculator 52. The notifier 54 notifies the user when the calculator 52 cannot calculate a return path that avoids the interference section R1 as described above. Such a return path cannot be calculated when, for example, the position P22 of the stopped motor 2b is included in the interference section R1 or the predetermined position P23 obtained by the obtainer 51 is included in the interference section R1. The display 55 displays changes in the current position of the motor 2b toward the predetermined position P23 in a manner superimposed on the electronic cam profile during the return process for the motor 2b being performed by the return unit 53. The display 55 may use a display panel of the standard PLC 5 or a display panel externally connected to the standard PLC 5.

### Return Process

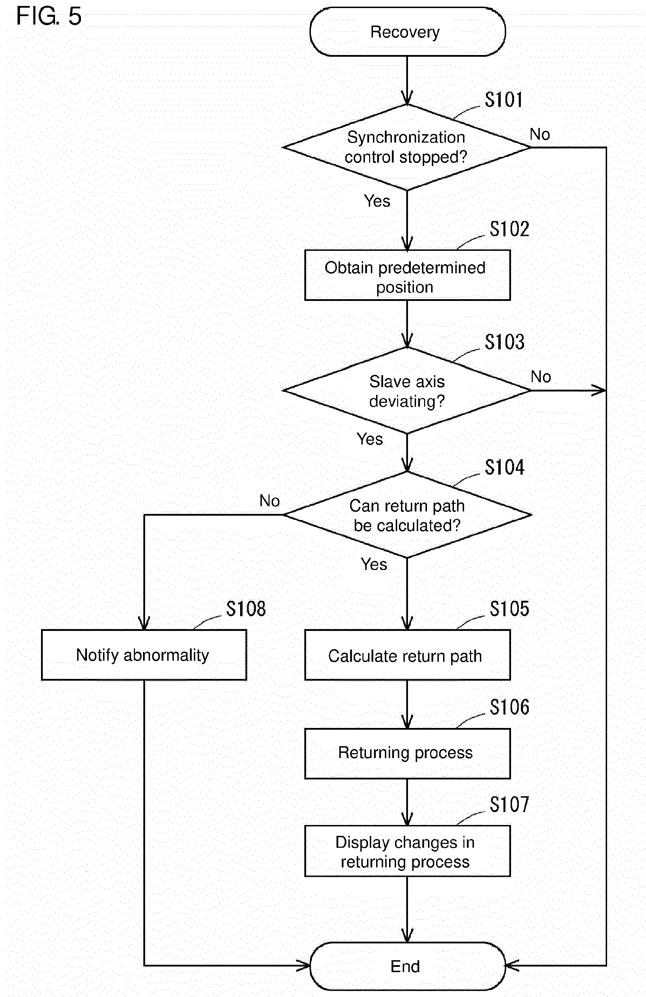

The return process for moving the motor 2b as the slave axis drive to return to the predetermined position P23 in response to stop of the electronic cam control in the cutting machine 6 will now be described with reference to FIG. 5. The return process shown in FIG. 5 is repeated at predetermined intervals. In step S101, the determination is performed as to whether the electronic cam control as synchronization control has been stopped by the synchronization control unit 50 in the cutting machine 6. In response to an affirmative determination result in step S101, the processing advances to step S102. In response to a negative determination result, the return process ends.

In step S102, the obtainer 51 obtains the predetermined position P23 of the motor 2b based on the electronic cam profile. In step S103, the determination is performed as to whether the current position P22 of the stopped motor 2b deviates from the obtained predetermined position P23. For the current position P22 deviating from the predetermined position P23 in the state shown in FIG. 4, the determination result is affirmative in step S103. In response to an affirmative determination result in step S103, the processing advances to step S104. In response to a negative determination result, the return process ends.

In step S104, the determination is performed as to whether a return path can be calculated for moving the motor 2b at the current position P22 deviating from the electronic cam profile to return to the predetermined position P23. More specifically, at the current position P22 of the stopped motor 2b included in the interference section R1, the stopped motor 2b has the rotary cutter 6a interfering with the workpiece. Moving the motor 2b in any manner causes the rotary cutter 6a to interfere with the workpiece further in the return process. For the predetermined position P23 calculated by the calculator 52 included in the interference section R1, the motor 2b is moved in a direction to cause the rotary cutter 6a to interfere with the workpiece. The return process thus involves interference between the rotary cutter 6a and the workpiece. Such interference between the rotary cutter 6a and the workpiece in the return process is unintended and inappropriate. The return process involving such unintended interference is not to be performed. For the current position P22 included in the interference section R1 or for the predetermined position P23 included in the interference section R1, the determination result in step S104 is negative, indicating that the return path cannot be calculated. In any other cases, the determination result in step S104 is affirmative, indicating that the return path can be calculated. In response to an affirmative determination result in step S104, the processing advances to step S105. In response to a negative determination result, the processing advances to step S108.

In step S105, the calculator 52 calculates the return path based on the current position P22 of the stopped motor 2b, the predetermined position P23, and the interference section R1. More specifically, the calculator 52 calculates, as the return path, a path from the current position P22 to the predetermined position P23 that avoids the interference section R1. In the example shown in FIG. 4, the return from the position P22 of the stopped motor 2b to the predetermined position P23 can include, as its return path, a path in the negative direction indicated by a solid arrow and a path in the positive direction indicated by an outline arrow. The slave axis position Y22 as the stop position P22 is beyond the interference section R1 in the positive direction. Thus, the return using any path in the negative direction can cause the current position to be in the interference section R1 in the return process, thus causing the rotary cutter 6a and the workpiece to interfere with each other as unintended in the return process. To avoid such unintended interference, the calculator 52 calculates a positive path (path indicated by an outline path) as the return path. The return path is calculated in either the positive direction or the negative direction selected depending on the correlation between the stopped slave axis position P22 and the interference section R1 and the correlation between the predetermined position P23 and the interference section R1. After the processing is complete in step S105, the processing advances to step S106.

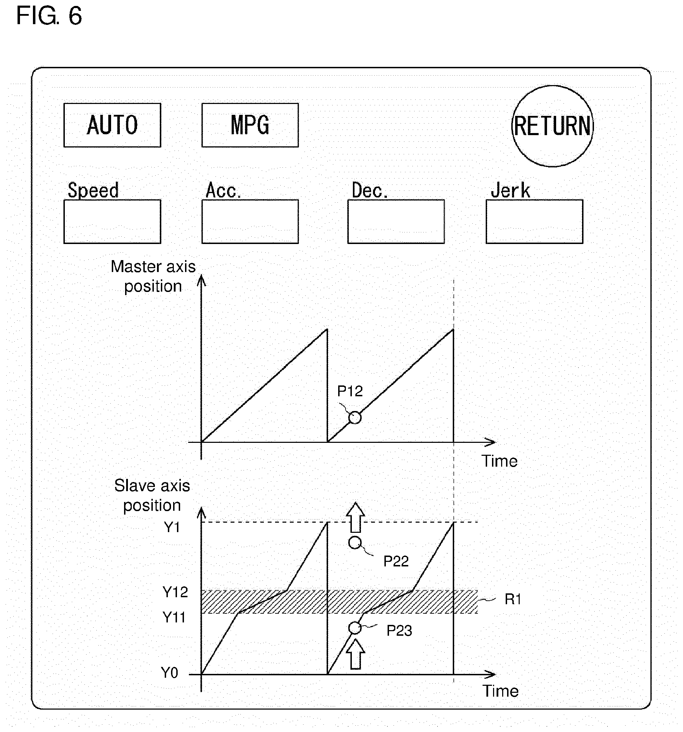

In step S106, the return unit 53 drives the motor 2b on the return path calculated in step S105 to cause the current position P22 to return to the predetermined position P23. In step S107, the display 55 causes changes in the current position P22 of the motor 2b toward the predetermined position P23 in the return process to appear on the display panel. FIG. 6 shows an example of the display screen. In the example shown in FIG. 6, the display panel shows, in its lower portion, substantially the same profile as the electronic cam profile shown in FIG. 4, on which the current position P12 of the stopped motor 2a and the current position P22 of the motor 2b appear in a superimposed manner. The display panel additionally shows changes in the current position P22 of the motor 2b toward the predetermined position P23 through the return process. In the present embodiment, changes in the current position P22 appear in the direction indicated by an outline arrow. Such changes allow the user to visually check the returning of the motor 2b toward the predetermined position P23.

The display panel may also show, in addition to the changes in the current position P22 of the motor 2b, parameters for controlling such positional changes. For example, the parameters include the movement speed (speed), acceleration (acc.), deceleration (dec.), and jerk (Jerk) of the current position P22 in the return process. For the display panel that is a touchscreen, the display panel and the standard PLC 5 may be designed to allow the user touching the display panel to input these parameter values, which may then be reflected in the return process for the motor 2b.

When the processing advances to step S108 after the negative determination in step S104, the notifier 54 notifies the user that a return path to avoid the interference section R1 cannot be calculated in step S108. The notification may be performed, for example, with text or an image appearing on the display panel shown in FIG. 6, or with sound. The user who has received the notification may move the motor 2b to return to the predetermined position P23 through a process other than the return process. For example, the user may press the button MPG on the display panel shown in FIG. 6 to switch the drive state of the motor 2b to the state drivable with a manual pulse generator. This allows the user to operate the manual pulse generator to manually adjust the position of the motor 2b to cause the position to return to the predetermined position P23.

As described above, the return process shown in FIG. 6 causes, in the cutting machine 6 for cutting a workpiece through electronic cam control, the positional correlation between the motor 2a and the motor 2b as the master axis and the slave axis to return to have an intended correlation following the electronic cam profile after the electronic cam control is stopped. More specifically, the return process causes the position of the motor 2b to return to an intended position without the rotary cutter 6a drivable by the motor 2b interfering with a workpiece as unintended in the process. Appendix 1

A controller (5) for a work machine (6) including a master axis drive (2a) corresponding to a master axis and a slave axis drive (2b) corresponding to a slave axis, the work machine (6) being configured to cause the slave axis drive (2b) to perform a predetermined task on a workpiece, the controller (5) being configured to perform synchronization control of a position of the slave axis drive (2b) based on an electronic cam profile corresponding to a cam angle of the master axis, the controller (5) comprising:
an obtainer (51) configured to obtain a predetermined position (P23) based on the electronic cam profile in response to stop of synchronization control over the master axis drive (2a) and the slave axis drive (2b), the predetermined position (P23) being a position of the slave axis drive (2b) corresponding to a cam angle of the stopped master axis;
a calculator (52) configured to calculate, in response to the stopped slave axis drive (2b) being determined to be at a position deviating from the predetermined position (P23), a return path based on the predetermined position (P23) and an interference section (R1) in which the slave axis drive (2b) interferes with the workpiece for the predetermined task, the interference section (R1) being in a range of cycles for the slave axis drive (2b), the return path causing the slave axis drive (2b) to reach the predetermined position (P23) while avoiding the interference section (R1); and
a return unit (53) configured to move the slave axis drive (2b) to the predetermined position (P23) on the return path by driving the slave axis drive (2b).

### REFERENCE SIGNS LIST

- 1: network

- 2a, 2b: motor
- 5: standard PLC
- 50: synchronization control unit
- 51: obtainer
- 52: calculator
- 53: return unit
- 54: notifier
- 55: display
- 6a: rotary cutter
- 6b: belt conveyor

## Claims

1. A controller (5) for a work machine (6) including a master axis drive (2a) corresponding to a master axis and a slave axis drive (2b) corresponding to a slave axis, the work machine (6) being configured to cause the slave axis drive (2b) to perform a predetermined task on a workpiece, the controller (5) being configured to perform synchronization control of a position of the slave axis drive (2b) based on an electronic cam profile corresponding to a cam angle of the master axis, the controller (5) comprising:
an obtainer (51) configured to obtain a predetermined position (P23) based on the electronic cam profile in response to stop of synchronization control over the master axis drive (2a) and the slave axis drive (2b), the predetermined position (P23) being a position of the slave axis drive (2b) corresponding to a cam angle of the stopped master axis; and
a return unit (53) configured to move the slave axis drive (2b) to the predetermined position (P23) on a return path by driving the slave axis drive (2b);
**characterized in that** the controller (5) further comprises a calculator (52) configured to calculate, in response to the stopped slave axis drive (2b) being determined to be at a position deviating from the predetermined position (P23), the return path based on the predetermined position (P23) and an interference section (R1) in which the slave axis drive (2b) interferes with the workpiece for the predetermined task, the interference section (R1) being in a range of cycles for the slave axis drive (2b), the return path causing the slave axis drive (2b) to reach the predetermined position (P23) while avoiding the interference section (R1).

2. The controller according to claim 1, wherein
the slave axis drive is rotatable in a positive direction and a negative direction, and
the calculator calculates, as the return path, a path in one of the positive direction or the negative direction to cause the slave axis drive to move to the predetermined position while avoiding the interference section.

3. The controller according to claim 1 or claim 2, further comprising:
a notifier (54) configured to notify that the calculator is unable to calculate the return path when a position of the stopped slave axis drive is included in the interference section or when the predetermined position is included in the interference section.

4. The controller according to any one of claims 1 to 3, further comprising:
a display (55) configured to display, together with the electronic cam profile, the predetermined position and a current position (P22) of the slave axis drive when the slave axis drive is being driven by the return unit.

## Patentansprüche

1. Steuereinrichtung (5) für eine Arbeitsmaschine (6), die einen Master-Achsenantrieb (2a), der einer Master-Achse entspricht, und einen Slave-Achsenantrieb (2b) umfasst, der einer Slave-Achse entspricht, wobei die Arbeitsmaschine (6) so ausgestaltet ist, dass sie den Slave-Achsenantrieb (2b) veranlasst, eine vorbestimmte Aufgabe auf einem Werkstück auszuführen, wobei die Steuereinrichtung (5) so ausgestaltet ist, dass sie eine Synchronisierungssteuerung einer Position des Slave-Achsenantriebs (2b) basierend auf einem elektronischen Nockenprofil ausführt, das einem Nockenwinkel der Master-Achse entspricht, wobei die Steuereinrichtung (5) Folgendes umfasst:
eine Erhalteeinrichtung (51), die so ausgestaltet ist, dass sie eine vorbestimmte Position (P23) basierend auf dem elektronischen Nockenprofil als Reaktion auf das Anhalten der Synchronisierungssteuerung über den Master-Achsenantrieb (2a) und den Slave-Achsenantrieb (2b) erhält, wobei die vorbestimmte Position (P23) eine Position des Slave-Achsenantriebs (2b) ist, die einem Nockenwinkel der angehaltenen Master-Achse entspricht; und
eine Rückführungseinheit (53), die so ausgestaltet ist, dass sie den Slave-Achsenantrieb (2b) zur vorbestimmten Position (P23) auf einem Rückführungsweg mittels Antreibens des Slave-Achsenantriebs (2b) bewegt;
**dadurch gekennzeichnet, dass** die Steuereinrichtung (5) ferner einen Rechner (52) umfasst, der so ausgestaltet ist, dass er als Reaktion auf den angehaltenen Slave-Achsenantrieb (2b), der als sich an einer Position befindlich bestimmt wird, die von der vorbestimmten Position (P23) abweicht, den Rückführungsweg basierend auf der vorbestimmten Position (P23) und einem Überlagerungssektor (R1) berechnet, in dem der Slave-Achsenantrieb (2b) sich mit dem Werkstück für die vorbestimmte Aufgabe überlagert, wobei der Überlagerungssektor (R1) in einem Bereich von Zyklen für den Slave-Achsenantrieb (2b) liegt, wobei der Rückführungsweg den Slave-Achsenantrieb (2b) veranlasst, die vorbestimmte Position (P23) unter Vermeidung des Überlagerungssektors (R1) zu erreichen.

2. Steuereinrichtung nach Anspruch 1, wobei
der Slave-Achsenantrieb in einer positiven Richtung und einer negativen Richtung drehbar ist und
der Rechner als den Rückführungsweg einen Weg in einer von der positiven Richtung oder der negativen Richtung so berechnet, dass der Slave-Achsenantrieb veranlasst wird, sich unter Vermeidung des Überlagerungssektors zu der vorbestimmten Position zu bewegen.

3. Steuereinrichtung nach Anspruch 1 oder Anspruch 2, ferner umfassend:
eine Meldeeinrichtung (54), die so ausgestaltet ist, dass sie meldet, dass der Rechner nicht in der Lage ist, den Rückführungsweg zu berechnen, wenn eine Position des angehaltenen Slave-Achsenantriebs in dem Überlagerungssektor umfasst ist oder wenn die vorbestimmte Position in dem Überlagerungssektor umfasst ist.

4. Steuereinrichtung nach einem der Ansprüche 1 bis 3, ferner umfassend:
eine Anzeige (55), die so ausgestaltet ist, dass sie, zusammen mit dem elektronischen Nockenprofil, die vorbestimmte Position und eine aktuelle Position (P22) des Slave-Achsenantriebs anzeigt, wenn der Slave-Achsenantrieb von der Rückführungseinheit angetrieben wird.

## Revendications

1. Contrôleur (5) pour une machine de travail (6) incluant un entraînement d'axe maître (2a) correspondant à un axe maître et un entraînement d'axe esclave (2b) correspondant à un axe esclave, la machine de travail (6) étant conçue pour amener l'entraînement d'axe esclave (2b) à réaliser une tâche prédéterminée sur une pièce, le contrôleur (5) étant configuré pour réaliser une commande de synchronisation d'une position de l'entraînement d'axe esclave (2b) sur la base d'un profil de came électronique correspondant à un angle de came de l'axe maître, le contrôleur (5) comportant :
un élément d'obtention (51) configuré pour obtenir une position prédéterminée (P23) sur la base du profil de came électronique en réponse afin d'arrêter la commande de synchronisation sur l'entraînement d'axe maître (2a) et l'entraînement d'axe esclave (2b), la position prédéterminée (P23) étant une position de l'entraînement d'axe esclave (2b) correspondant à un angle de came de l'axe maître arrêté ; et
une unité de retour (53) configurée pour déplacer l'entraînement d'axe esclave (2b) à la position prédéterminée (P23) sur un trajet retour en entraînant l'entraînement d'axe esclave (2b) ;
**caractérisé en ce que** le contrôleur (5) comporte en outre un calculateur (52) configuré pour calculer, en réponse au fait que l'entraînement d'axe esclave (2b) arrêté est déterminé comme étant à une position s'écartant de la position prédéterminée (P23), le trajet retour sur la base de la position prédéterminée (P23) et d'une section d'interférence (R1) dans laquelle l'entraînement d'axe esclave (2b) interfère avec la pièce pour la tâche prédéterminée, la section d'interférence (R1) étant dans une plage de cycles pour l'entraînement d'axe esclave (2b), le trajet retour amenant l'entraînement d'axe esclave (2b) à atteindre la position prédéterminée (P23) tout en évitant la section d'interférence (R1).

2. Contrôleur selon la revendication 1, dans lequel
l'entraînement d'axe esclave peut tourner dans une direction positive et une direction négative et
le calculateur calcule, en tant que trajet retour, un trajet dans une direction parmi la direction positive ou la direction négative pour amener l'entraînement d'axe esclave à se déplacer vers la position prédéterminée tout en évitant la section d'interférence.

3. Contrôleur selon la revendication 1 ou la revendication 2, comportant en outre :
un notificateur (54) configuré pour notifier que le calculateur est incapable de calculer le trajet retour lorsqu'une position de l'entraînement d'axe esclave arrêté est incluse dans la section d'interférence ou lorsque la position prédéterminée est incluse dans la section d'interférence.

4. Contrôleur selon l'une quelconque des revendications 1 à 3, comportant en outre :
un affichage (55) configuré pour afficher, conjointement au profil de came électronique, la position prédéterminée et une position actuelle (P22) de l'entraînement d'axe esclave lorsque l'entraînement d'axe esclave est en cours d'entraînement par l'unité de retour.
